# EUROPEAN PATENT SPECIFICATION

(11) **EP 2 124 385 B1**
(45) Date of publication and mention of the grant of the patent: **08.02.2012**
(21) Application number: 08734238.2
(22) Date of filing: 05.05.2008
(51) Int. Cl.: H04L 12/16, H04L 29/06, H04L 12/18

(54) **METHOD, DEVICE AND SYSTEM FOR MULTICAST SERVICE AUTHORIZATION CONTROLLING**
VERFAHREN, VORRICHTUNG UND SYSTEM ZUR STEUERUNG DER AUTHORISIERUNG FÜR EINEN MULTICAST-DIENST
PROCÉDÉ, DISPOSITIF ET SYSTÈME POUR UN CONTRÔLE D'AUTORISATION D'UN SERVICE DE MULTIDIFFUSION

(30) Priority: 04.06.2007 CN 200710107386
(43) Date of publication of application: 25.11.2009
(73) Proprietor: Huawei Technologies Co., Ltd., Longgang District, Shenzhen Guangdong 518129 (CN)
(72) Inventor: HUANG, Shibi, Longgang District 518129, Shenzhen, (CN); ZUO, Yu, Longgang District 518129, Shenzhen, (CN); ZHU, Ning, Longgang District 518129, Shenzhen, (CN)
(74) Representative: Kreuz, Georg Maria
(86) International application number: PCT/CN2008/070882
(87) International publication number: WO 2008/148320

(56) References cited:
- CN-A- 1 414 759
- CN-A- 1 852 119
- CN-A- 1 859 179
- CN-A- 1 866 857
- GB-A- 2 423 435
- US-A- 6 046 989

## Description

### Field of the Technology

The present invention relates to the field of communications, and more particularly to a method, a device and a system for multicast service authorization control.

### Background of the Invention

The Internet Protocol (IP) television (IPTV) service is a service based on a broadband IP network and mainly relying on streaming media. Compared with the conventional television (TV), the IPTV can provide richer and more flexible services and a comprehensive IPTV value added service platform to realize communication, data, video, audio, and other services. The live TV/broadcast TV (LTV/BTV) service in the IPTV needs to send data generated by a source node to multiple destination nodes, that is, a point-to-multipoint (PTM) communication. Currently, the most effective solution for the PTM communication is multicast technology that can effectively utilize network bandwidth and avoid the waste of bandwidth resources.

In order to support the multicast technology, in a next generation network (NGN) architecture formulated in telecommunication and Internet converged services and protocols for advanced networking (TISPAN), the NGN is divided into a service layer and a transport layer. The transport layer includes a network attachment sub-system (NASS) and a resource and admission control subsystem (RACS) responsible for providing an independent user access manager function (AMF) for the upper service layer.

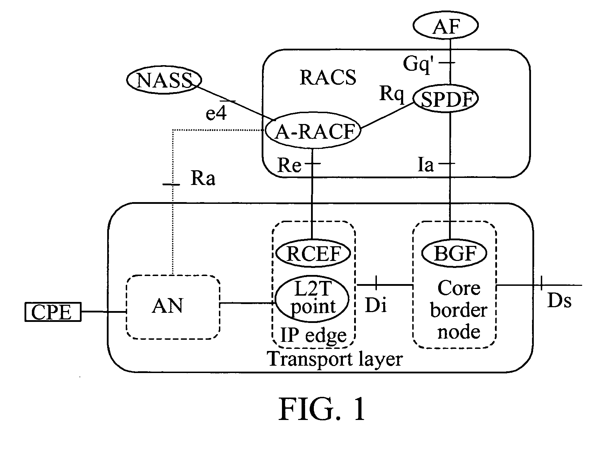

By implementing resource admission control, the RACS shields the specific details of a transport network upwards to the service layer to support the separation of service control from transport function and senses the resource use status of the transport network downwards to ensure a correct and reasonable use of transport network resources. Accordingly, the quality of service (QoS) of the service is guaranteed and the phenomenon of bandwidth and service theft is prevented. A functional architectural view of the RACS is shown in FIG. 1, in which the main network elements are introduced as follows.

A service-based policy decision function (SPDF) provides a unified interface to an application layer, shields the topology of bottom layer network and the specific access type, and provides service-based policy control. The SPDF selects a local policy according to a request of an application function (AF), maps the request into an IPQoS parameter, and sends the IPQoS parameter to an access-resource and admission control function (A-RACF) and a border gateway function (BGF) to request the corresponding resources.

Being located in an access network, the A-RACF has functions of admission control and network policy convergence. The A-RACF receives a request from the SPDF, and then realizes admission control based on the saved policies to accept or reject the request for transporting resources. The A-RACF acquires network attachment information and user QoS list information from the NASS via an e4 reference point. Accordingly, available network resources can be determined according to network position information (for example, a physical node address of an access user), and meanwhile, the user QoS list information is referred to in processing a resource allocation request.

The transport layer includes three kinds of functional entities. Being a border gateway, the BGF may be located between an access network and a core network (to realize a core BGF) or located between two core networks (to realize an interconnect BGF). Under the control of the SPDF, the BGF completes the functions including network address translation (NAT), gating, QoS labeling, bandwidth limitation, usage measurement, and resource synchronization. A resource control enforcement function (RCEF) implements a layer 2/layer 3 (L2/L3) media stream policy defined by the access operator that is transported from the A-RACF via an Re reference point, so as to accomplish gating, QoS labeling, bandwidth limitation, and other functions. A layer 2 termination function (L2TF) is a functional entity terminating the layer 2 connection in the access network. The RCEF and the L2TF are different functional entities, and are usually realized together on an IP edge of a physical equipment.

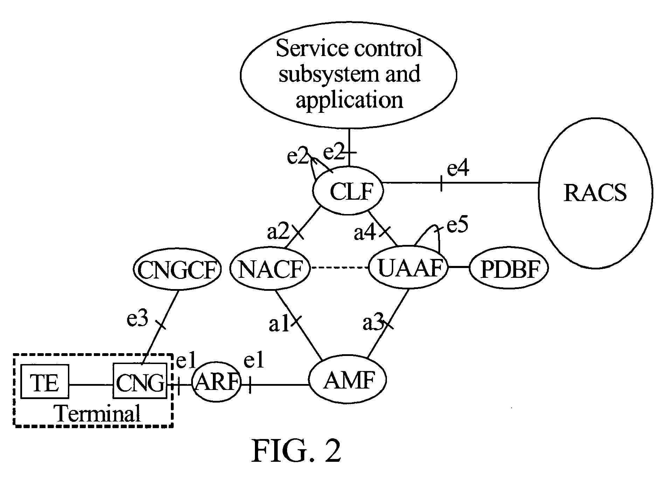

The NASS accomplishes management of the user attached access network. A functional architectural view of the NASS is shown in FIG. 2 in which the main network elements are introduced as follows.

The NASS consists of a network access configuration function (NACF), a user access authorization function (UAAF), a connectivity session location and repository function (CLF), an access manager function (AMF), and other logical functional units. The NACF is responsible for allocating an IP address to a user equipment (UE) and providing other network configuration parameters such as a domain name server (DNS) address and an upper layer service access point address required by the UE. The NACF further provides the UE with an access network identifier which uniquely identifies the access network to which the UE is attached. With this identifier, an upper layer application can locate the CLF. The UAAF provides user authentication and authorization checking functions. The UAAF acquires user authentication and network authorization information from the user's subscription information contained in a profile data base function (PDBF). The UAAF also collects accounting data for billing. The CLF registers the IP address allocated to the UE and related network location information and geographical position information provided by the NACF, and associates the information. The CLF also stores a user identification, the user's QoS list, and the privacy setting of user's position information. The CLF provides a position query function to the upper layer service. The AMF is responsible for translating access requests of the UE, forwarding the UE's requests for allocation of an IP address and network configuration parameters to the NACF, and forwarding user authentication requests to the UAAF. In the reverse direction, the AMF forwards the response from the NACF or UAAF to the UE. An access relay function (ARF), which is not a component of the NASS, is located between a customer network gateway (CNG) and the NASS, and as a relay, it is able to insert position information provided by the access network into the user's requests. In a normal UE access process, the UE first interacts with the UAAF via the ARF/AMF to accomplish authentication and network authorization, and then interacts with the NACF via the ARF/AMF to acquire the IP address and other configuration parameters for access. The UAAF and the NACF respectively send the user-related information to the CLF for association and storage at the CLF, and then the RACS and the upper layer service can query the information. The position of the AMF is related to the access authentication technology that is used; if a Point-to-Point Protocol Over Ethernet (PPPoE) authentication is used, the AMF is located on an IP edge; and if a dynamic host configuration protocol (DHCP) authentication manner is used, the AMF may be located on the IP edge or located in the same entity as the NACF.

The IP multicast technology has important meaning for the development of the IPTV service. In the multicast service, some necessary policies should be employed to enable the service to be controllable, so as to guarantee the operability and manageability of the service. The control of a multicast user is one of many kinds of multicast control policies, and an important technical means thereof is authentication and authorization of the user. In the current operating networks, the authorization manner of the multicast user is mainly statically configuring a user's multicast service authority information on a multicast authorization control point of a bearer layer and determining whether the user is authorized to watch programs by the multicast authorization control point according to the information, thereby forwarding packets to only legal users of IPTV

The multicast authorization control point of the bearer layer needs to store multicast service authority information of all users associated with the node, but if the user roams or replaces the associated control node for other reason, or the user changes subscription information, the multicast service authority information stored by the multicast control node needs to be updated. Since a large number of multicast authorization control points exist in the network, the existing method of statically configuring the user's multicast service authority information on the multicast authorization control points causes the requirement for the network to maintain the user's multicast service authority information distributed on the multiple multicast authorization control points. The modification, deletion, addition, and other operations on the authority information need to be performed on the multiple multicast authorization control points where the information is distributed respectively, thus resulting in a complex operation, a high implementation cost, and high management and maintenance costs.

US 6,046,989 A relates to a multicast management method for dynamically updating multicast connection groups, in response to requests from subscribing multicast service users.

GB 2423435 relates to an access control method for controlling access to a multicast delivery tree in an IPv4 or an IPv6 network. A derived value of the key, obtained by applying a derivation function to the key is used. The derivation function is a one-way hash function.

### SUMMARY OF THE INVENTION

The present invention is directed to a method, a device, and a system for multicast service authorization control, so as to support that a multicast authorization control point dynamically updates a user's multicast service authority information and implements multicast authorization control on the user according to the dynamically updated multicast service authority information.

According to a first aspect of the present invention the method for multicast service authorization control includes: acquiring a user's multicast service authority information sent from a bearer control layer by a multicast authorization control point in the process of interacting with the bearer control layer; and implementing multicast authorization control on the user by the multicast authorization control point according to the acquired multicast service authority information.

According to a second aspect of the present invention the multicast authorization control point includes an acquisition unit adapted to acquire a user's multicast service authority information sent from a bearer control layer in the process of interacting with the bearer control layer; and an authorization control unit adapted to implement multicast authorization control on the user according to the multicast service authority information acquired by the acquisition unit.

According to a third aspect of the present invention the system for multicast service authorization control includes a multicast authorization control point and a user terminal. The multicast authorization control point includes an acquisition unit adapted to acquire a user's multicast service authority information sent from a bearer control layer in the process of interacting with the bearer control layer; and an authorization control unit adapted to implement multicast authorization control on the user according to the multicast service authority information acquired by the acquisition unit.

In the implementation forms of the present invention, since the multicast authorization control point acquires the user's multicast service authority information sent from the bearer control layer in the process of interacting with the bearer control layer, the user's multicast service authority information is dynamically updated by the multicast authorization control point, such that the maintenance is simple. Afterwards, the multicast authorization control point may implement multicast authorization control on the user according to the newly acquired multicast service authority information, thereby achieving a better control effect than the prior art.

### BRIEF DESCRIPTION OF THE DRAWINGS

FIG. 1 is a functional architectural view of an existing RACS;
FIG. 2 is a functional architectural view of an existing NASS;
FIG. 3 is a flow chart of a method for multicast service authorization control according to an embodiment of the present invention;
FIG. 4 is a schematic structural view of a multicast authorization control point according to an embodiment of the present invention;
FIG. 5 is a flow chart in a first embodiment of the present invention;
FIG. 6 is a flow chart in a second embodiment of the present invention;
FIG. 7 is a flow chart in a third embodiment of the present invention;
FIG. 8 is a flow chart in a fourth embodiment of the present invention; and
FIG. 9 is a flow chart in a fifth embodiment of the present invention.

### DETAILED DESCRIPTION OF THE EMBODIMENTS

As can be seen from the analyses of the prior art, according to the current development trend of the IPTV service, the multicast technology will be widely applied in a bearer layer of the IPTV, and the authorization control of a multicast user will become a key for guaranteeing the operation and development of the IPTV service. However, the current authorization control of the multicast user is in a static manner, such that the maintenance is difficult and lacks flexibility. As a result, the current authorization control manner is only applicable to the case of few users and channels in the initial stage of the development of multicast service, and cannot completely satisfy the demand of carrying out the IPTV service on a large scale.

In order to support that a multicast authorization control point in a bearer layer dynamically updates a user's multicast service authority information and implements authorization control on the user's multicast service request for watching programs, so as to satisfy the demand of developing the IPTV service on a large scale, the following is done.

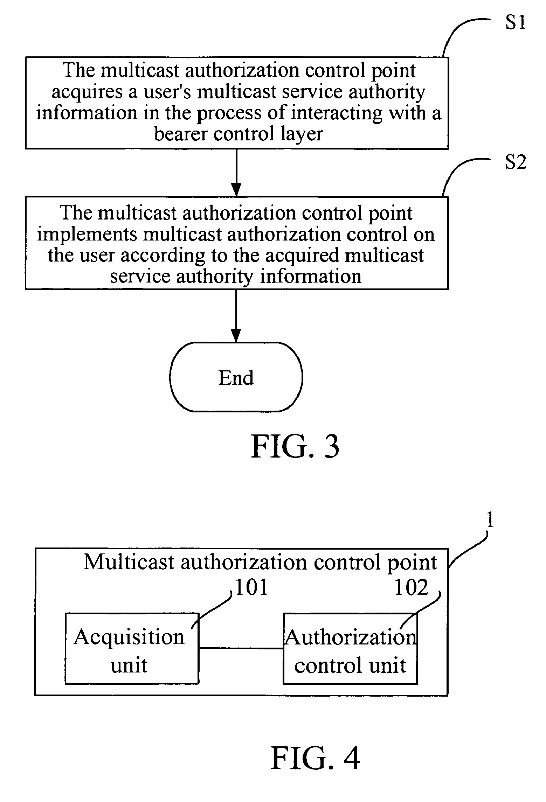

A method for multicast service authorization control is provided in an embodiment of the present invention. As shown in FIG. 3, the method includes the following main steps.

In step S1, a multicast authorization control point acquires a user's multicast service authority information in the process of interacting with a bearer control layer.

In this step, the multicast authorization control point acquires the user's multicast service authority information in one of the following manners.

In a first manner, when the user accesses a network or modifies subscription information, an NASS delivers the user's multicast service authority information to the multicast authorization control point.

In a second manner, the multicast authorization control point requests and acquires the user's multicast service authority information from an RACS.

In a third manner, the multicast authorization control point requests and acquires the user's multicast service authority information from the NASS.

In step S2, the multicast authorization control point implements multicast authorization control on the user according to the acquired multicast service authority information.

It should be noted that, depending on the specific implementation manner, the user's multicast service authority information may be denoted in many ways. One way is directly providing an allowable multicast address list of the user. However, since the user's multicast address lists have many contents and the multicast service authorities of many users are the same, in order to avoid the transfer of a large number of multicast address lists on an interface and meanwhile to share multicast service authority information among different users, some multicast authority groups may be defined. For example, a basic program authority, a movie channel program authority, and a sports channel program authority are respectively denoted by different multicast authority groups. In this way, multicast authority information transferred on the interface may be identified by using a multicast authority group identification understood by both parties of the sending and receiving entities, for example, a name of a physical multicast authority group. Upon the introduction of the concept of the multicast authority group, the user's multicast service authority information described in the subsequent solutions includes, but not limited to, multicast service authority information denoted in the following manners, for example, by a user's IP address or identification, and one or more allowable multicast addresses and/or one or more multicast authority group identifications.

A multicast authorization control point is further provided in an embodiment of the present invention. The multicast authorization control point may specifically be an IP edge or an access node (AN) (or other entity) having the function of dynamically acquiring a user's multicast service authority information. As shown in FIG. 4, the multicast authorization control point 1 includes an acquisition unit and an authorization control unit.

The acquisition unit 101 is adapted to acquire the user's multicast service authority information in the process of interacting with a bearer control layer. Specifically, the acquisition unit 101 acquires the user's multicast service authority information in one of the following manners. In a first manner, when the user accesses a network or modifies subscription information, an NASS delivers the user's multicast service authority information to the multicast authorization control point. In a second manner, the multicast authorization control point requests and acquires the user's multicast service authority information from an RACS. In a third manner, the multicast authorization control point requests and acquires the user's multicast service authority information from the NASS.

The authorization control unit 102 is adapted to implement multicast authorization control on the user according to the multicast service authority information acquired by the acquisition unit 101.

A system for multicast service authorization control is further provided in an embodiment of the present invention. The system may include the multicast authorization control point shown in FIG. 4 and a user terminal.

The specific description is provided in the following through five embodiments.

In a first embodiment, an NASS delivers a user's multicast service authority information to an IP edge or an AN via an RACS; the IP edge or the AN implements multicast authorization control on the user according to the acquired multicast service authority information.

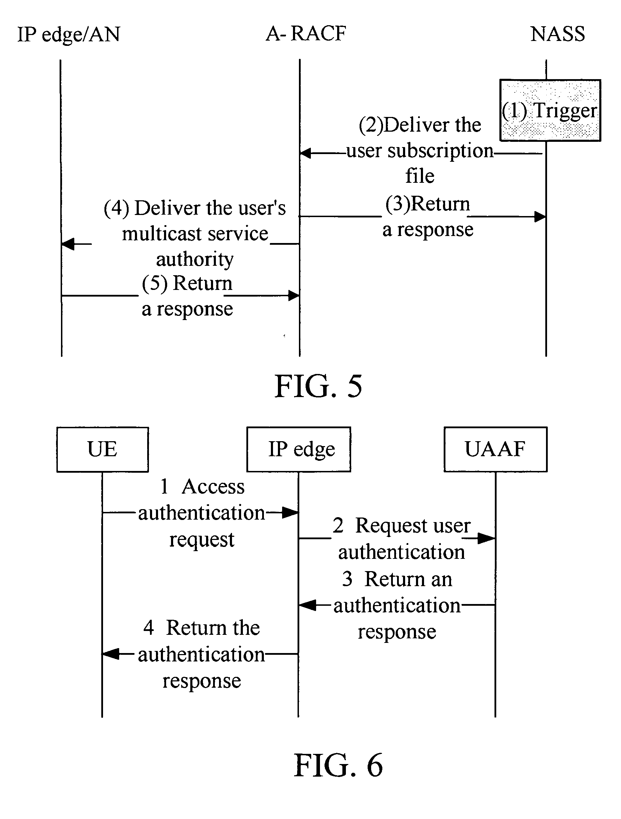

As shown in FIG. 5, the part in which the NASS delivers the user's multicast service authority information to the IP edge or the AN via the RACS includes the following steps.
(1) The NASS receives a user terminal's request for acquisition of bearer resources and attachment to an access network or request for modification of a user access subscription file that has been pushed to the RACS.
(2) The NASS notifies the user access subscription file (containing the multicast service authority information) to an A-RACF. An interface between a CLF and the A-RACF has been defined (e4) in RACS R1, which uses the Diameter protocol. A push notification request (PNR) command has been defined for the CLF to transfer session-related information to the A-RACF. However, the current session information does not contain the service authority information, and thus the interface capability needs to be extended, such that the interface can transfer the user's multicast service authority information, for example, including a user IP address and/or user identification and a multicast address list and/or multicast authority group list that the user is authorized to receive.
(3) The A-RACF checks whether the relevant information is enough and returns a response to the NASS to indicate the result.
(4) The A-RACF sends the user's multicast service authority information to the IP edge or the AN. If the service authority information is set on the IP edge, between the A-RACF and a functional entity RCEF on the IP edge, an Re interface via which the A-RACF delivers a bearer control policy to the RCEF has existed, such that the Re interface capability needs to be extended to support the transfer of the multicast service authority information; if the service authority information is set on the AN, the information may be transferred via an Ra interface defined between the A-RACF and the AN, and the Ra interface is also required to have the capability of transferring multicast service information.
(5) The IP edge or the AN stores the user's multicast service authority information, updates a data base, and returns a response.

The part in which the IP edge or the AN implements multicast authorization control on the user according to the acquired multicast service authority information specifically includes: implementing multicast authorization control on the user by the IP edge or the AN upon reception of the user's request for joining a multicast group, and allowing the user to join the requested multicast group when the user has the multicast service authority of the requested multicast group; otherwise, rejecting the user's joining in the requested multicast group.

In a second embodiment, an NASS directly delivers a user's multicast service authority to an IP edge; the IP edge implements multicast authorization control on the user according to the acquired multicast service authority information. (It should be noted that, this embodiment is only applicable to the case that the IP edge serves as a multicast authorization control point.)

As shown in FIG. 6, the part in which the NASS directly delivers the user's multicast service authority to the IP edge includes the following steps.
(1) The user initiates an authentication request for accessing a network. If the PPP protocol is used, the request herein is a PPP establishment request initiated by the user in order to acquire an IP address; if the DHCP mode is used, the request is an authentication request initiated by the user based on 802.1x/PANA and other manners.
(2) The authentication request is sent via the IP edge to request user authentication from a UAAF.
(3) The UAAF queries a PDBF to acquire a user subscription file, determines whether the user is authorized to access the network, and returns an authentication response to the user via the IP edge.

If the user is authorized to access the network, the UAAF carries the user subscription file (containing the multicast service authority information) acquired at the PDBF in the returned authentication response. Currently, the user subscription file does not contain the multicast service authority information, and thus the information needs to be added and the relevant interface needs to be extended, such that the interface can transfer the multicast service authority information.
(4) The IP edge further forwards the authentication response to the user. If the user's multicast service authority information is carried in the response, the IP edge stores the multicast service authority and meanwhile forwards the authentication response to the user after deleting the information in the response.

The part in which the IP edge implements multicast authorization control on the user according to the acquired multicast service authority information specifically includes: implementing multicast authorization control on the user by the IP edge upon reception of the user's request for joining a multicast group, and allowing the user to join the requested multicast group when the user has the multicast service authority of the requested multicast group; otherwise, rejecting the user's joining in the requested multicast group.

It should be noted that, the process in which the user initiates the request for modification of the access subscription file is substantially consistent with the step described in the second embodiment, and will not be repeated here.

In a third embodiment, an IP edge or an AN requests and acquires a user's multicast service authority from an RACS; the IP edge or the AN implements multicast authorization control on the user according to the acquired multicast service authority information.

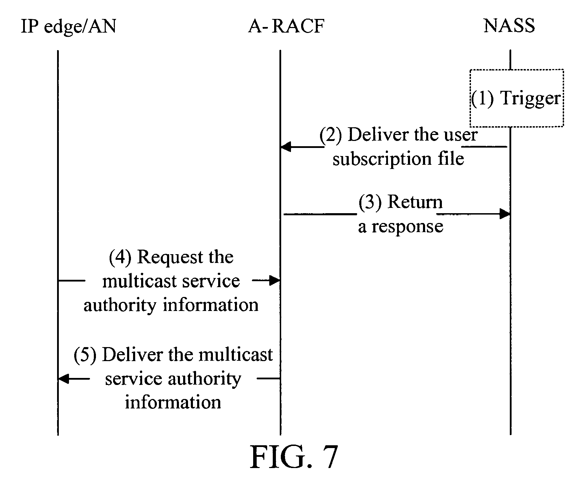

As shown in FIG. 7, the part in which the IP edge or the AN requests and acquires the user's multicast service authority from the RACS includes the following steps.
(1) The NASS receives a user terminal's request for acquisition of bearer resources and attachment to an access network or request for modification of a user access subscription file that has been pushed to an A-RACF.
(2) The NASS delivers the user access subscription file (containing the multicast service authority information) to the A-RACF. An interface between a CLF and the A-RACF has been defined (e4) in RACS R1, which uses the Diameter protocol. A PNR command has been defined for the CLF to transfer session-related information to the A-RACF. However, the current session information does not contain the multicast service authority information, and thus the session information needs to be expanded and the interface capability needs to be extended, such that the interface can transfer the user's multicast service authority information.
(3) The A-RACF returns a response.
(4) The IP edge or the AN initiates to the A-RACF a request for the user's multicast service authority which carries the user's IP address or identification. Currently, an Re interface and an Ra interface have existed between the IP edge and the A-RACF and between the AN and the A-RACF for the A-RACF to transfer a bearer control policy to the IP edge or the AN, but do not support a bearer layer's request for the relevant policy upwards. Thus, the capability of the interfaces needs to be extended, such that the interfaces can support the initiation of the request for acquisition of the multicast service authority by the IP edge or the AN to the RACS.
(5) The A-RACF delivers the user's multicast service authority information to the IP edge or the AN.

The part in which the IP edge or the AN implements multicast authorization control on the user according to the acquired multicast service authority information specifically includes: implementing multicast authorization control on the user by the IP edge or the AN upon reception of the user's request for joining a multicast group, and allowing the user to join the requested multicast group when the user has the multicast service authority of the requested multicast group; otherwise, rejecting the user's joining in the requested multicast group.

In a fourth embodiment, an IP edge or an AN requests and acquires a user's multicast service authority from an RACS; the IP edge or the AN implements multicast authorization control on the user according to acquired multicast service authority information.

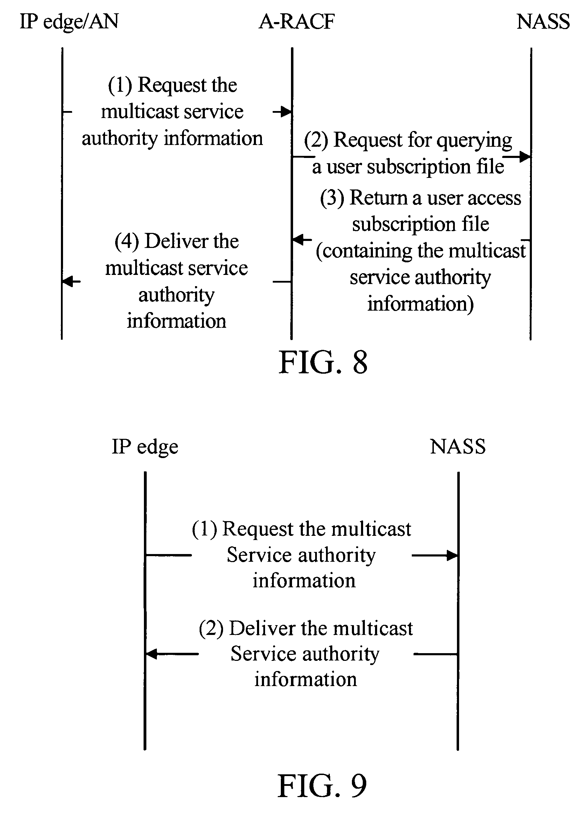

As shown in FIG. 8, the part in which the IP edge or the AN requests and acquires the user's multicast service authority from the RACS includes the following steps.
(1) The IP edge or the AN initiates to an A-RACF a request for the user's multicast service authority which carries the user's IP address or identification. Currently, an Re interface and an Ra interface have existed between the IP edge and the A-RACF and between the AN and the A-RACF for the A-RACF to transfer a bearer control policy to the IP edge or the AN, but do not support a bearer layer's request for the relevant policy upwards. Thus, the capability of the interfaces needs to be extended, such that the interfaces can support the initiation of the request for acquisition of the multicast service authority by the IP edge or the AN to the RACS.
(2) The A-RACF initiates to an NASS a request for querying a user subscription file, and the request contains the user's IP address or identification.
(3) The NASS makes a query and returns a user access subscription file (containing the multicast service authority information). An interface between a CLF and the A-RACF has been defined (e4) in RACS R1, which uses the Diameter protocol. A PNR command has been defined for the CLF to transfer session-related information to the A-RACF. However, the current session information does not contain the multicast service authority information, and thus the session information needs to be expanded and the interface capability needs to be extended, such that the interface can transfer the user's multicast service authority information.
(4) The A-RACF delivers the user's multicast service authority information to the IP edge or the AN.

The part in which the IP edge or the AN implements multicast authorization control on the user according to the acquired multicast service authority information specifically includes: implementing multicast authorization control on the user by the IP edge or the AN upon reception of the user's request for joining a multicast group, and allowing the user to join the requested multicast group when the user has the multicast service authority of the requested multicast group; otherwise, rejecting the user's joining in the requested multicast group.

In a fifth embodiment, an IP edge requests and acquires a user's multicast service authority from an NASS; the IP edge or an AN implements multicast authorization control on the user according to acquired multicast service authority information. (It should be noted that, this embodiment is only applicable to the case that the IP edge serves as a multicast authorization control point.)

As shown in FIG. 9, the part in which the IP edge requests and acquires the user's multicast service authority from the NASS includes the following steps.
1) The IP edge requests the user's multicast service authority information from the NASS. The request carries the user's IP address or identification.
2) The NASS makes a query and returns the user's multicast service authority.

The part in which the IP edge implements multicast authorization control on the user according to the acquired multicast service authority information specifically includes: implementing multicast authorization control on the user by the IP edge upon reception of the user's request for joining a multicast group, and allowing the user to join the requested multicast group when the user has the multicast service authority of the requested multicast group; otherwise, rejecting the user's joining in the requested multicast group.

It should be noted that, in the above five embodiments, when a user is on line, a multicast authorization control point may acquire the user's multicast service authority information only once, and then implement multicast authorization control on the user according to the information; the multicast authorization control point may also acquire the user's multicast service authority information each time when the user acquires bearer resources and initiates a request for attachment to an access network or initiates a request for modification of a user access subscription file that has been pushed to an A-RACF, and then implement multicast authorization control on the user according to the newly multicast service authority information.

In view of the above, in the embodiments of the present invention, since a multicast authorization control point acquires (actively acquires or passively receives) a user's multicast service authority information sent from a bearer control layer in the process of interacting with the bearer control layer, the user's multicast service authority information is dynamically updated by the multicast authorization control point. Since the multicast service authority information saved by the multicast authorization control point is updated in a dynamic manner in the embodiments of the present invention, even if a large number of multicast authorization control points exist in the network, the network maintenance of the user's multicast service authority information distributed on the large number of multicast authorization control points is simple, which achieves low implementation cost and management and maintenance costs and is adaptable to the demand of carrying out the IPTV service on a large scale in the future.

Afterwards, the multicast authorization control point may implement multicast authorization control on the user according to the newly acquired multicast service authority information. Since the multicast service authority information saved by the multicast authorization control point is updated in a dynamic manner in the embodiments of the present invention, the dynamic manner apparently has more real-time characteristics than the static configuration manner in the prior art, so as to achieve a better control effect than the prior art.

Furthermore, in the embodiments of the present invention, various manners for the multicast authorization control point to acquire the user's multicast service authority information in the process of interacting with the bearer control layer are provided, so as to better support the present invention.

Finally, it should be noted that, the above embodiments are merely provided for describing the technical solutions of the present invention, but not intended to limit the present invention. It should be understood by persons of ordinary skill in the art that, although the present invention has been described in detail with reference to the foregoing embodiments, modifications can be made to the technical solutions described in the foregoing embodiments, or equivalent replacements can be made to some technical features therein.

## Claims

1. A method for multicast service authorization control, **characterized in that** the method comprises:
acquiring (S1), by a multicast authorization control point, a user's multicast service authority information sent from a bearer control layer in the process of interacting with the bearer control layer; and
implementing multicast authorization control (S2), by the multicast authorization control point, on the user according to the acquired multicast service authority information.

2. The method according to claim 1, wherein the multicast authorization control point acquires the user's multicast service authority information in one manner of:
in a first manner, when the user accesses a network or modifies subscription information, a network attachment sub-system, NASS, delivers the user's multicast service authority information to the multicast authorization control point;
in a second manner, the multicast authorization control point requests and acquires the user's multicast service authority information from a resource and admission control subsystem, RACS; and
in a third manner, the multicast authorization control point requests and acquires the user's multicast service authority information from the NASS.

3. The method according to claim 2, wherein in the first manner, the NASS delivers the user's multicast service authority information in one manner of:
the NASS delivers the user's multicast service authority information to the multicast authorization control point via an access-resource and admission control function, A-RACF, in the RACS; and
a user access authorization function, UAAF, in the NASS directly delivers the user's multicast service authority information to the multicast authorization control point.

4. The method according to claim 2, wherein in the second manner, the multicast authorization control point requests and acquires the user's multicast service authority information from the RACS in one manner of:
when the user accesses a network or modifies subscription information, the NASS delivers the user's multicast service authority information to the A-RACF; and when the multicast authorization control point requests the user's multicast service authority information from the A-RACF, the A-RACF returns the user's current multicast service authority information to the multicast authorization control point; and
when the multicast authorization control point requests the user's multicast service authority information from the A-RACF, the A-RACF acquires the user's multicast service authority information from the NASS and returns the user's multicast service authority information to the multicast authorization control point.

5. The method according to any one of claims 1 to 4, wherein the multicast service authority information comprises: the user's Internet Protocol, IP, address or identification and at least one multicast address or at least one multicast authority group identification.

6. A multicast authorization control point, **characterized in that** the multicast authorization control point comprises:
an acquisition unit, adapted to acquire a user's multicast service authority information sent from a bearer control layer in the process of interacting with the bearer control layer; and
an authorization control unit, adapted to implement multicast authorization control on the user according to the multicast service authority information acquired by the acquisition unit.

7. The multicast authorization control point according to claim 6, wherein the multicast authorization control point is an Internet Protocol, IP, edge or an access node (AN).

8. The multicast authorization control point according to claim 6 or 7, wherein the acquisition unit acquires the user's multicast service authority information in one manner of:
in a first manner, when the user accesses a network or modifies subscription information, a network attachment sub-system, NASS, delivers the user's multicast service authority information to the multicast authorization control point;
in a second manner, the multicast authorization control point requests and acquires the user's multicast service authority information from a resource and admission control subsystem, RACS; and
in a third manner, the multicast authorization control point requests and acquires the user's multicast service authority information from the NASS.

9. The multicast authorization control point according to claim 8, wherein the user's multicast service authority information is transferred to the acquisition unit via an extension interface protocol.

10. A system for multicast service authorization control, **characterized in that** the system comprises:
a multicast authorization control point and a user terminal, wherein the multicast authorization control point comprises:
an acquisition unit, adapted to acquire a user's multicast service authority information sent from a bearer control layer in the process of interacting with the bearer control layer; and
an authorization control unit, adapted to implement multicast authorization control on the user according to the multicast service authority information acquired by the acquisition unit.

## Patentansprüche

1. Verfahren für eine Multicastdienst-Legitimierungssteuerung, **dadurch gekennzeichnet, dass** das Verfahren Folgendes umfasst:
Erfassen (S 1) durch einen Multicast-Legitimierungssteuerpunkt von Multicastdienst-Legitimationsinformationen eines Anwenders, die von einer Trägersteuerschicht im Prozess der Wechselwirkung mit der Trägersteuerschicht gesendet werden; und
Implementieren einer Multicast-Legitimierungssteuerung (S2) durch den Multicast-Legitimierungssteuerpunkt bei dem Anwender gemäß den erfassten Multicastdienst-Legitimationsinformationen.

2. Verfahren nach Anspruch 1, wobei der Multicast-Legitimierungssteuerpunkt die Multicastdienst-Legitimationsinformationen des Anwenders auf eine der folgenden Weisen erfasst:
auf eine erste Weise, wenn der Anwender auf ein Netz zugreift oder Teilnehmerinformationen modifiziert, in der ein Netzverbindungs-Untersystem, NASS, die Multicastdienst-Legitimationsinformationen des Anwenders zu dem Multicast-Legitimierungssteuerpunkt liefert;
auf eine zweite Weise, in der der Multicast-Legitimierungssteuerpunkt die Multicastdienst-Legitimationsinformationen des Anwenders von einem Betriebsmittel- und Zulassungssteuerungs-Untersystem, RACS, anfordert und erfasst; und
auf eine dritte Weise, in der der Multicast-Legitimierungssteuerpunkt die Multicastdienst-Legitimationsinformationen des Anwenders von dem NASS anfordert und erfasst.

3. Verfahren nach Anspruch 2, wobei in der ersten Weise das NASS die Multicastdienst-Legitimationsinformationen des Anwenders auf eine der folgenden Weisen liefert:
das NASS liefert die Multicastdienst-Legitimationsinformationen des Anwenders zu dem Multicast-Legitimierungssteuerpunkt über eine Zugriffsbetriebsmittel- und Zugriffzulassungs-Steuerfunktion, A-RACF, in dem RACS; und
eine Anwenderzugriffs-Legitimierungsfunktion, UAAF, in dem NASS liefert direkt die Multicastdienst-Legitimationsinformationen des Anwenders zu dem Multicast-Legitimierungssteuerpunkt.

4. Verfahren nach Anspruch 2, wobei in der zweiten Weise der Multicast-Legitimierungssteuerpunkt die Multicastdienst-Legitimationsinformationen des Anwenders von dem RACS auf eine der folgenden Weisen anfordert und erfasst:
wenn der Anwender auf ein Netz zugreift oder Teilnehmerinformationen modifiziert, liefert das NASS die Multicastdienst-Legitimationsinformationen des Anwenders zu der A-RACF; und wenn der Multicast-Legitimierungssteuerpunkt die Multicastdienst-Legitimationsinformationen des Anwenders von der A-RACF anfordert, leitet die A-RACF die momentanen Multicastdienst-Legitimationsinformationen des Anwenders zu dem Multicast-Legitimierungssteuerpunkt zurück; und
wenn der Multicast-Legitimierungssteuerpunkt die Multicastdienst-Legitimationsinformationen des Anwenders von der A-RACF anfordert, erfasst die A-RACF die Multicastdienst-Legitimationsinformationen des Anwenders von dem NASS und leitet die Multicastdienst-Legitimationsinformationen des Anwenders zu dem Multicast-Legitimierungssteuerpunkt zurück.

5. Verfahren nach einem der Ansprüche 1 bis 4, wobei die Multicastdienst-Legitimationsinformationen Folgendes umfassen: die Internetprotokoll-Adresse, IP-Adresse, des Anwenders oder die Kennung und wenigstens eine Multicast-Adresse oder wenigstens eine Multicast-Legitimationsgruppenkennung.

6. Multicast-Legitimierungssteuerpunkt, **dadurch gekennzeichnet, dass** der Multicast-Legitimierungssteuerpunkt Folgendes umfasst:
eine Erfassungseinheit, die dazu ausgelegt ist, Multicastdienst-Legitimationsinformationen eines Anwenders zu erfassen, die von einer Trägersteuerschicht im Prozess der Wechselwirkung mit der Trägersteuerschicht gesendet werden; und
eine Legitimierungssteuereinheit, die dazu ausgelegt ist, eine Multicast-Legitimierungssteuerung bei dem Anwender in Übereinstimmung mit den Multicastdienst-Legitimationsinformationen, die durch die Erfassungseinheit erfasst werden, zu implementieren.

7. Multicast-Legitimierungssteuerpunkt nach Anspruch 6, wobei der Multicast-Legitimierungssteuerpunkt eine Internetprotokoll-Edge, IP-Edge, oder ein Zugangsknoten (AN) ist.

8. Multicast-Legitimierungssteuerpunkt nach Anspruch 6 oder 7, wobei die Erfassungseinheit die Multicastdienst-Legitimationsinformationen des Anwenders auf eine der folgenden Weisen erfasst:
auf eine erste Weise, wenn der Anwender auf ein Netz zugreift oder Teilnehmerinformationen modifiziert, in der ein Netzverbindungs-Untersystem, NASS, die Multicastdienst-Legitimationsinformationen des Anwenders zu dem Multicast-Legitimierungssteuerpunkt liefert;
auf eine zweite Weise, in der der Multicast-Legitimierungssteuerpunkt die Multicastdienst-Legitimationsinformationen des Anwenders von einem Betriebsmittel- und Zulassungssteuerungs-Untersystem, RACS, anfordert und erfasst; und
auf eine dritte Weise, in der der Multicast-Legitimierungssteuerpunkt die Multicastdienst-Legitimationsinformationen des Anwenders von dem NASS anfordert und erfasst.

9. Multicast-Legitimierungssteuerpunkt nach Anspruch 8, wobei die Multicastdienst-Legitimationsinformationen des Anwenders an die Erfassungseinheit über ein Erweiterungsschnittstellenprotokoll übertragen werden.

10. System für eine Multicastdienst-Legitimierungssteuerung, **dadurch gekennzeichnet, dass** das System Folgendes umfasst:
einen Multicast-Legitimierungssteuerpunkt und ein Anwenderendgerät, wobei der Multicast-Legitimierungssteuerpunkt Folgendes umfasst:
eine Erfassungseinheit, die dazu ausgelegt ist, Multicastdienst-Legitimationsinformationen eines Anwenders zu erfassen, die von einer Trägersteuerschicht im Prozess der Wechselwirkung mit der Trägersteuerschicht gesendet werden; und
eine Legitimierungssteuereinheit, die dazu ausgelegt ist, eine Multicastlegitimierungssteuerung bei dem Anwender in Übereinstimmung mit den Multicastdienst-Legitimationsinformationen, die von der Erfassungseinheit erfasst werden, zu implementieren.

## Revendications

1. Procédé de commande d'autorisation de service de multidiffusion, **caractérisé en ce que** le procédé comprend :
l'acquisition (S1), par un point de commande d'autorisation de multidiffusion, d'une information d'autorité de service de multidiffusion d'utilisateur envoyée par une couche de commande de support dans le processus d'interaction avec la couche de commande de support ; et
la mise en oeuvre d'une commande d'autorisation de multidiffusion (S2) par le point de commande d'autorisation de multidiffusion, sur l'utilisateur en fonction de l'information d'autorité de service de multidiffusion acquise.

2. Procédé selon la revendication 1, dans lequel le point de commande d'autorisation de multidiffusion acquiert l'information d'autorité de service de multidiffusion de l'une des trois manières suivantes :
selon une première manière, quand l'utilisateur sollicite un réseau ou modifie des informations d'abonnement, un sous-système de rattachement au réseau, NASS, délivre l'information d'autorité de service de multidiffusion de l'utilisateur au point de commande d'autorisation de multidiffusion ;
selon une deuxième manière, le point de commande d'autorisation de multidiffusion requiert et acquiert l'information d'autorité de service de multidiffusion de l'utilisateur depuis un sous-système de contrôle de ressource et d'admission, RACS; et
selon une troisième manière, le point de commande d'autorisation de multidiffusion requiert et acquiert l'information d'autorité de service de multidiffusion de l'utilisateur depuis le NASS.

3. Procédé selon la revendication 2, dans lequel selon la première manière, le NASS délivre l'information d'autorité de service de multidiffusion de l'utilisateur de l'une des façons suivantes :
le NASS délivre l'information d'autorité de service de multidiffusion de l'utilisateur au point de commande d'autorisation de multidiffusion par l'intermédiaire d'une fonction de commande de ressource d'accès et d'admission, A-RACF, dans le RACS; et
une fonction d'autorisation d'accès d'utilisateur, UAAF, dans le NASS délivre directement l'information d'autorité de service de multidiffusion de l'utilisateur au point de commande d'autorisation de multidiffusion.

4. Procédé selon la revendication 2, dans lequel selon la deuxième manière, le point de commande d'autorisation de multidiffusion requiert et acquiert l'information d'autorité de service de multidiffusion de l'utilisateur depuis le RACS de l'une des façons suivantes :
quand l'utilisateur sollicite un réseau ou modifie des informations d'abonnement, le NASS délivre l'information d'autorité de service de multidiffusion de l'utilisateur à 1'A-RACF; et quand le point de commande d'autorisation de multidiffusion requiert l'information d'autorité de service de multidiffusion de l'utilisateur auprès de l'A-RACF, l'A-RACF renvoie l'information d'autorité de service de multidiffusion courante de l'utilisateur au point de commande d'autorisation de multidiffusion ; et
quand le point de commande d'autorisation de multidiffusion requiert l'information d'autorité de service de multidiffusion de l'utilisateur auprès de l'A-RACF, l'A-RACF acquiert l'information d'autorité de service de multidiffusion de l'utilisateur depuis le NASS et renvoie l'information d'autorité de service de multidiffusion de l'utilisateur au point de commande d'autorisation de multidiffusion.

5. Procédé selon l'une quelconque des revendications 1 à 4, dans lequel l'information d'autorité de service de multidiffusion comprend : l'adresse ou l'identification de Protocole Internet, IP, de l'utilisateur et au moins une adresse de multidiffusion ou au moins une identification de groupe d'autorité de multidiffusion.

6. Point de commande d'autorisation de multidiffusion, **caractérisé en ce que** le point de commande d'autorisation de multidiffusion comprend :
une unité d'acquisition, adaptée pour acquérir une information d'autorité de service de multidiffusion de l'utilisateur envoyée par une couche de commande de support dans le processus d'interaction avec la couche de commande de support ; et
une unité de commande d'autorisation, adaptée pour mettre en oeuvre une commande d'autorisation de multidiffusion sur l'utilisateur en fonction de l'information d'autorité de service de multidiffusion acquise par l'unité d'acquisition.

7. Point de commande d'autorisation de multidiffusion selon la revendication 6, le point de commande d'autorisation de multidiffusion étant un noeud limitrophe de protocole Internet, IP ou un noeud d'accès (AN).

8. Point de commande d'autorisation de multidiffusion selon la revendication 6 ou 7, dans lequel l'unité d'acquisition acquiert l'information d'autorité de service de multidiffusion de l'utilisateur de l'une des trois manières suivantes :
selon une première manière, quand l'utilisateur sollicite un réseau ou modifie des informations d'abonnement, un sous-système de rattachement au réseau, NASS, délivre l'information d'autorité de service de multidiffusion de l'utilisateur au point de commande d'autorisation de multidiffusion ;
selon une deuxième manière, le point de commande d'autorisation de multidiffusion requiert et acquiert l'information d'autorité de service de multidiffusion de l'utilisateur depuis un sous-système de contrôle de ressource et d'admission, RACS ; et
selon une troisième manière, le point de commande d'autorisation de multidiffusion requiert et acquiert l'information d'autorité de service de multidiffusion de l'utilisateur depuis le NASS.

9. Point de commande d'autorisation de multidiffusion selon la revendication 8, dans lequel l'information d'autorité de service de multidiffusion de l'utilisateur est transférée à l'unité d'acquisition par le biais d'un protocole d'interface d'extension.

10. Système de commande d'autorisation de service de multidiffusion, **caractérisé en ce qu'**il comprend :
un point de commande d'autorisation de multidiffusion et un terminal d'utilisateur, le point de commande d'autorisation de multidiffusion comprenant :
une unité d'acquisition, adaptée pour acquérir une information d'autorité de service de multidiffusion de l'utilisateur envoyée par une couche de commande de support dans le processus d'interaction avec la couche de commande de support ; et
une unité de commande d'autorisation, adaptée pour mettre en oeuvre une commande d'autorisation de multidiffusion sur l'utilisateur en fonction de l'information d'autorité de service de multidiffusion acquise par l'unité d'acquisition.
